# EUROPEAN PATENT APPLICATION

(11) **EP 3 016 056 A1**
(43) Date of publication of application: **04.05.2016**
(21) Application number: 15191027.0
(22) Date of filing: 22.10.2015
(51) Int. Cl.: G06Q 30/02

(54) **METHOD, DIGITAL SIGNAGE SERVER AND COMPUTER PROGRAM PRODUCT FOR DISPLAYING MOBILE MEDIA CONTENT ASSOCIATED TO A DIGITAL SIGNAGE DISPLAY UNIT**

(30) Priority: 28.10.2014 US 201414525577
(71) Applicant: BroadSign International LLC., St-Louis, MI 63141 (US)
(72) Inventor: Mongeau, Bryan, Quebec, H3C 5P1 (CA); Parisien, Daniel, Quebec, H2X 1W7q (CA); Smith, Jody, Verdun, H4G 1Y8 (CA)
(74) Representative: Wittmann, Günther

(57) **Abstract**

A method implemented by a mobile device and a digital signage server for displaying mobile media content associated to a digital signage display unit on the mobile device. The mobile device received a unique identifier of the digital signage display unit, and transmits the unique identifier to the digital signage server. The mobile device receives a plurality of mobile media content items, corresponding to at least some of a plurality of digital signage contents currently displayed on the digital signage display unit, from the digital signage server. The mobile device displays the plurality of mobile media content items, receives a selection of one among the plurality of mobile media content items from a user, and transmits the selected mobile media content item to the digital signage server. The mobile device receives mobile media content corresponding to the selected mobile media content item, and displays the received mobile media content.

## Description

### TECHNICAL FIELD

The present disclosure relates to the field of digital signage, and more particularly digital signage for advertising. More specifically, the present disclosure presents a method, a computer program product and a digital signage server for displaying mobile media content associated to a digital signage display unit on a mobile device.

### BACKGROUND

Signage refers to graphic designs, such as symbols, emblems, words, etc. In advertising, signage refers to the design or use of signs and symbols to communicate a message to a specific group, usually for the purpose of marketing. Digital signage is a sub segment of signage and comprises the use of digital signage display units, such as liquid-crystal displays (LCDs), light-emitting diode (LED) displays, projector screens, etc. Digital signage is a field in great expansion especially for advertising in a public venue (e.g. an airport, a shopping mall, etc.), because of the potential to advertise dynamically, such as is done with an advertising video.

Mobile devices are also used for advertising. For example, mobile advertisements may be presented on a webpage displayed by an Internet browser of the mobile device, or may simply show up in an application run by the mobile device. Moreover, mobile advertisements may also comprise marketing by reception of a Short Message Service (SMS) message or a Multimedia Messaging Service (MMS) message at the mobile device.

In the particular example of a digital signage exhibited in a public venue, a user of a mobile device may look at advertisements on the digital signage display unit, and may also receive different advertisements on his mobile device without any association between the advertisement on the digital signage display unit and the advertisement on the mobile device. Moreover, if the user of a mobile device is keen to obtain more information on an advertisement displayed on the digital signage display unit, seeking this information is not straightforward, because of the lack of association and intercommunication between the digital signage display unit and the mobile device.

Therefore, there is a need for a method, a computer program product and a digital signage server for displaying mobile media content associated to a digital signage display unit on a mobile device.

### SUMMARY

According to a first aspect, the present disclosure provides a method for displaying mobile media content associated to a digital signage display unit on a mobile device. The method comprises receiving at the mobile device a unique identifier of the digital signage display unit. The method comprises transmitting a request comprising the unique identifier to a digital signage server. The method comprises receiving a plurality of mobile media content items from the digital signage server. The plurality of mobile media content items corresponds to at least some of a plurality of digital signage contents currently displayed on the digital signage display unit. The method comprises displaying the plurality of mobile media content items on a display of the mobile device. The method comprises receiving a selection of one among the plurality of mobile media content items from a user of the mobile device. The method comprises transmitting the selected mobile media content item to the digital signage server. The method comprises receiving mobile media content corresponding to the selected mobile media content item. The method comprises displaying the received mobile media content on the display.

According to a second aspect, the present disclosure provides a computer program product comprising instructions deliverable via an electronically-readable media, such as storage media and communication links. The instruction when executed by a processing unit of a mobile device provide for displaying mobile media content associated to a digital signage display unit on the mobile device, according to the aforementioned method. The second aspect also relates to a computer program product that when loaded into the memory of a computer having a processor executes the steps of the method according to the first aspect.

According to a third aspect, the present disclosure provides a digital signage server. The digital signage server comprises memory, a communication interface, and a processing unit. The memory stores a plurality of digital signage content items corresponding to a plurality of digital signal contents currently displayed on a plurality of digital signage display units. Each digital signage display unit has a unique identifier. The memory further stores a plurality of mobile media content items corresponding to at least some of the digital signage content items. The communication interface receives from a mobile device a request comprising a unique identifier of a specific digital signage display unit. The processing unit determines specific digital signage content items among the plurality of digital signage content items corresponding to the unique identifier of the specific digital signage display unit. The processing unit determines specific mobile media content items among the plurality of mobile media content items corresponding to the determined specific digital signage content items. The processing unit transmits the determined specific mobile media content items to the mobile device via the communication interface. The processing unit processes a selected item among the determined specific mobile media content items. The selected item is received from the mobile device via the communication interface.

### BRIEF DESCRIPTION OF THE DRAWINGS

Embodiments of the disclosure will be described by way of example only with reference to the accompanying drawings, in which:
Figure 1 represents exemplary block diagrams of a digital signage server and a digital signage display unit;
Figure 2A represents a detailed block diagram of the digital signage display unit of Figure 1;
Figure 2B represents an exemplary block diagram of a digital signage content displayed on the digital signage display unit of Figure 2A;
Figure 3 represents a method implemented by the digital signage server of Figure 1 for displaying mobile media content associated to a digital signage display unit on a mobile device;
Figure 4 represents a method implemented by a mobile device for displaying mobile media content associated to a digital signage display unit on the mobile device; and
Figure 5 represents an exemplary block diagram of a mobile device.

### DETAILED DESCRIPTION

The foregoing and other features will become more apparent upon reading of the following non-restrictive description of illustrative embodiments thereof, given by way of example only with reference to the accompanying drawings.

Various aspects of the present disclosure generally address one or more of the problems related to of the lack of association and intercommunication between a digital signage display unit and a mobile device for displaying related media content, and more particularly related media advertising.

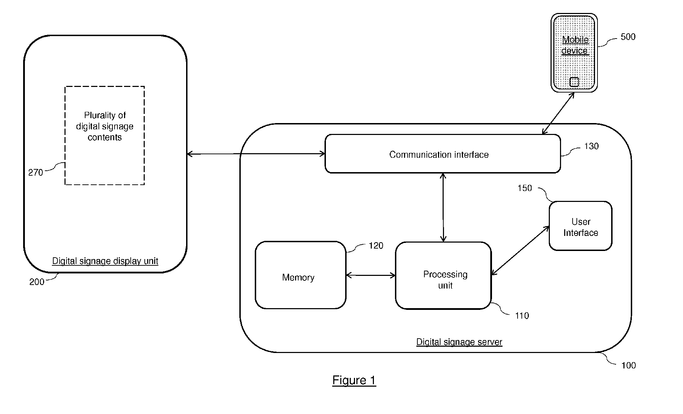

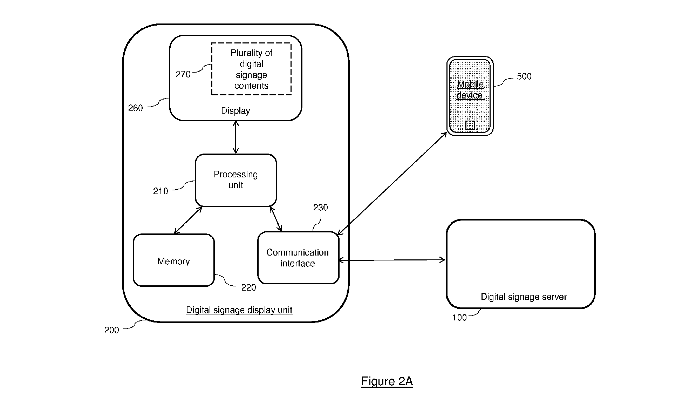

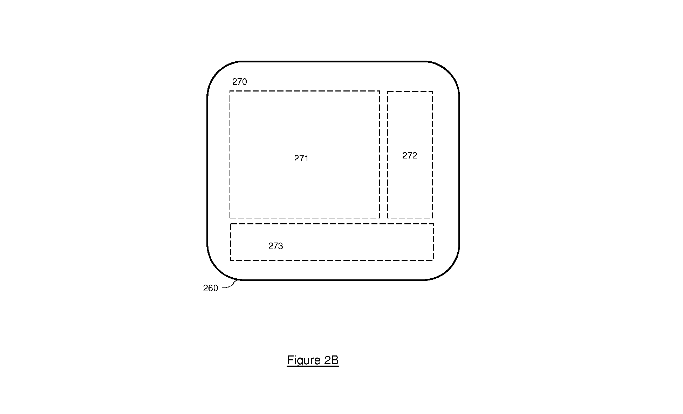

Referring now concurrently to Figures 1, 2A and 2B, a digital signage display unit 200 is represented.

The digital signage display unit 200 comprises a processing unit 210. The processing unit 210 comprises one or more processors (not represented in Figure 2A) capable of executing instructions of a computer program. Each processor may further have one or several cores.

The digital signage display unit 200 comprises a memory 220. The memory 220 stores instructions of the computer program(s) executed by the processing unit 210, data generated by the execution of the computer program(s), data received from a communication interface 230, etc. Only a single memory 220 is represented in Figure 2A, but the digital signage display unit 200 may comprise several types of memories, including volatile memory (such as a volatile Random Access Memory (RAM)) and non-volatile memory (such as a hard drive).

The digital signage display unit 200 comprises the communication interface 230. The communication interface 230 allows the digital signage display unit 200 to exchange data with a digital signage server 100, and with other computing devices such as, without limitations, a mobile device 500. The communication interface 230 supports at least some of the following communication technologies: fixed broadband, cellular, Wi-Fi, mesh, Bluetooth, a combination thereof, etc. For example, the digital signage display unit 200 may communicate with the digital signage server 100 via a cellular network or a fixed broadband network, and may communicate with the mobile device 500 via Bluetooth. Although a single mobile device 500 is represented in Figure 2A, the digital signage display unit 200 generally communicates with a plurality of mobile devices 500 localized close to the digital signage display unit 200.

The digital signage display unit 200 comprises a display 260. A single display 260 is represented in Figure 2A, however the digital signage display unit 200 may comprise several displays 260. The display(s) 260 may consist of, without limitations, a liquid-crystal display (LCD), a light-emitting diode (LED) display, an organic light-emitting diode (OLED) display, a projector screen, a combination thereof, etc. At least some of the displays may have a large screen, to be visible by a large crowd. The digital signage display unit 200 is usually located in a public venue (e.g. an airport, a shopping mall, etc.), so that a large number of persons located close to the digital signage display unit 200 can see a content displayed on its display 260.

Figure 2B illustrates a display 260 of a digital signage display unit 200 displaying a plurality of digital signage contents 270. For example, a first digital signage content 271 may comprise a larger video image, a second digital signage content 272 may comprise a series of static images (such as a local weather report or a Quick Response (QR) code), and a third digital signage content 273 may comprise a banner of different series of static images. For any digital signage display unit 200, at any point in time, the plurality of digital signage contents 270 displayed by its display 260 may include advertising in the form of still or video images, or other content of interest. The plurality of digital signage contents 270 arrangement represented in Figure 2B may comprise different numbers of digital signage contents 270 that may be displayed in different orientations. Moreover, the number of digital signage contents 270 and their respective orientations may vary temporally.

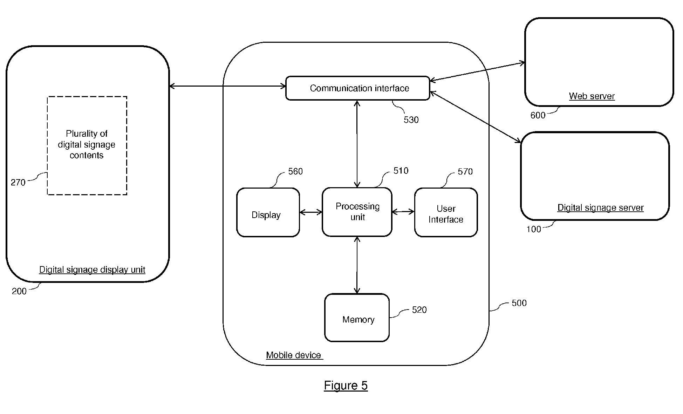

Referring now to Figure 5, the mobile device 500 comprises a processing unit 510. The processing unit 510 comprises one or more processors (not represented in Figure 5) capable of executing instructions of a computer program. Each processor may further have one or several cores.

The mobile device 500 comprises a memory 520. The memory 520 stores instructions of the computer program(s) executed by the processing unit 510, data generated by the execution of the computer program(s), data received from a communication interface 530, etc. Only a single memory 520 is represented in Figure 5, but the mobile device 500 may comprise several types of memories, including volatile memory (such as a volatile Random Access Memory (RAM)) and non-volatile memory (such as a non-volatile memory chip).

The mobile device 500 comprises a communication interface 530. The communication interface 530 allows the mobile device 500 to exchange data with the digital signage server 100, with web servers 600, and with the digital signage display unit 200. A single web server 600 is represented in Figure 5 for simplification purposes, but the mobile device 500 communicates with a plurality of web servers 600. The communication interface 530 supports at least some of the following communication technologies: cellular, Wi-Fi, mesh, Bluetooth, a combination thereof, etc. For example, the mobile device 500 may communicate with the digital signage server 100 and web servers 600 via a cellular network or a Wi-Fi network, and may communicate with the digital signage display unit 200 via Bluetooth. A single digital signage display unit 200 is represented in Figure 5 for simplification purposes, but the mobile device 500 may communicate with a plurality of digital signage display units 200 located in the vicinity of the mobile device 500, for instance within communication range of its Bluetooth interface.

The mobile device 500 comprises a display 560 for displaying content generated by the processing unit 510, and content received from the web servers 600 or from the digital signage server 100 via the communication interface 530.

The mobile device 500 comprises a user interface 570, for instance a touchscreen and / or a keyboard.

The mobile device 500 may consist of one of the following: a smartphone, a tablet, a laptop, a phablet, a smartwatch, etc.

Referring now to Figure 1, the digital signage server 100 is detailed. For the purpose of clarity, only a single digital signage server 100 is represented in Figure 1, but the digital signage server 100 may consist of a cluster of generic purpose computers or a cluster of high performance specialized computers.

The digital signage server 100 comprises a processing unit 110. The processing unit 110 comprises one or more processors (not represented in Figure 1) capable of executing instructions of a computer program. Each processor may further have one or several cores.

The digital signage server 100 comprises a memory 120. The memory 120 stores instructions of the computer program(s) executed by the processing unit 110, data generated by the execution of the computer program(s), data received from a communication interface 130, etc. Only a single memory 120 is represented in Figure 1, but the digital signage server 100 may comprise several types of memories, including volatile memory (such as a volatile Random Access Memory (RAM)) and non-volatile memory (such as a hard drive).

The digital signage server 100 also comprises a communication interface 130. The communication interface 130 allows the digital signage server 100 to exchange data with the digital signage display unit 200, and with the mobile device 500. The communication interface 230 supports at least some of the following communication technologies: fixed broadband, cellular, Wi-Fi, a combination thereof, etc. For example, the digital signage server 100 may communicate with the digital signage display unit 200 via a fixed broadband network, and may communicate with the mobile device 500 via a cellular network. Although a single mobile device 500 is represented in Figure 1, the digital signage server 100 generally communicates with a plurality of mobile devices 500. Similarly, although a single digital signage display unit 200 is represented in Figure 1, the digital signage server 100 generally communicates with a plurality of digital signage display units 200.

The digital signage server 100 may also comprise a user interface 150 (e.g. a keyboard, a mouse, a touchscreen, etc.).

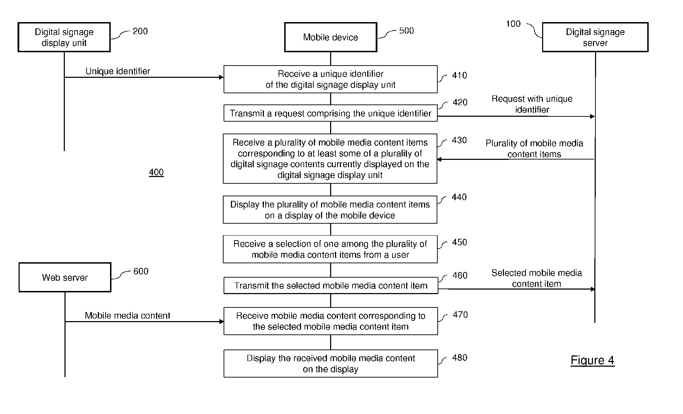

Referring now concurrently to Figures 2A, 4 and 5, a method 400 (represented in Figure 4) for displaying on the mobile device 500 mobile media content associated to the digital signage display unit 200 is illustrated. The method 400 is implemented by the mobile device 500.

Furthermore, a specific computer program may have instructions for implementing the steps of the method 400. The instructions are comprised in a computer program product (e.g. the memory 520). The instructions provide for displaying mobile media content associated to the digital signage display unit 200 on the mobile device 500, when executed by the processing unit 510 of the mobile device 500. The instructions are deliverable via an electronically-readable media, such as a storage media (e.g. USB key) or via communication links (e.g. Wi-Fi network or cellular network) through the communication interface 530 of the mobile device 500.

The method 400 comprises the step 410 of receiving by the processing unit 510 the mobile device 500 a unique identifier of the digital signage display unit 200. For example, the unique identifier may be transmitted by the digital signage display unit 200 to the mobile device 500 via one of the following means: a QR code (a camera of the mobile device 500 reads the QR code on the display 260 of the digital signage display unit 200), a Near Field Communication (NFC) tag (an NFC reader of the mobile device 500 reads an NFC tag of the digital signage display unit 200), a Bluetooth or Bluetooth Low Energy (BLE) call to action (via the respective communication interfaces 230 and 530 of the digital signage display unit 200 and mobile device 500), a SMS message (via the respective communication interfaces 230 and 530 of the digital signage display unit 200 and mobile device 500), etc. The aforementioned technologies for transmitting the unique identifier are for illustration purposes only. Any other technology allowing a transmission of information from the digital signage display unit 200 to the mobile device 500 may be used.

In a particular aspect, the unique identifier may be a redirector Uniform Resource Locator (URL). For example, the redirector URL redirects to a specific domain comprising a mobile subdomain with a directory comprising an identification of each particular digital signage display unit 200, such as an alphanumeric identification. In a more particular example, considering two digital signage display units 200 with following alphanumeric identifications 45A27 and 46B28, their respective redirector URL may be m.domainname.com/45A27, and m.domainname.com/45A28. In an alternative embodiment, the unique identifier may simply be the unique alphanumeric identification (e.g. 45A27 or 46B28) of the digital signage display unit 200.

The method 400 comprises the step 420 of transmitting by the processing unit 510 a request comprising the unique identifier to the digital signage server 100, via the communication interface 530.

In a particular aspect, the request comprising the redirector URL is an Hypertext Transfer Protocol (HTTP) request. The digital signage server 100 implements a web server, and further exchanges of data between the mobile device 500 and the digital signage server 100 (e.g. steps 430 and 460 of the method 400) are also based on the HTTP protocol. The web server hosts a plurality of mobile subdomains (e.g. m.domainname.com/45A27 and m.domainname.com/45A28 as previously mentioned) corresponding to a plurality of digital signage display units 200 under its control. A browser executed by the processing 510 of the mobile device 500 receives the redirector URL and accesses the corresponding mobile subdomain (e.g. m.domainname.com/45A27) via the HTTP request. Upon reception of the HTTP request by the digital signage server 100, its web server executes a program or a script to determine a plurality of mobile media content items.

Alternatively, the request comprising the redirector URL is an Hypertext Transfer Protocol Secure (HTTPS) request, to secure the exchanged data. Further exchanges of data between the mobile device 500 and the digital signage server 100 (e.g. steps 430 and 460 of the method 400) may also be based on the HTTPS protocol. In still another alternative, a combination of the HTTP and HTTPS protocols may be used for the exchanges of data between the mobile device 500 and the digital signage server 100.

Even when the unique identifier is not a redirector URL, the exchanges of data between the mobile device 500 and the digital signage server 100 (e.g. steps 420, 430 and 460 of the method 400) may be based on the HTTP protocol.

The method 400 comprises the step 430 of receiving by the processing unit 510 the plurality of determined mobile media content items from the digital signage server 100, via the communication interface 530. The plurality of mobile media content items corresponds to at least some of the plurality of digital signage contents 270 currently displayed on the display 260 of the digital signage display unit 200. The determination by the digital signage server 100 of the mobile media content items based on the digital signage contents 270 currently displayed on the display 260 of the digital signage display unit 200 will be detailed later in the description.

A mobile media content item identifies a particular mobile media content. The particular mobile media content may comprise at least one of the following: an image, a text, a video, a web page, a Javascript, a Cascading Style Sheet (CSS) content, an iframe content, an Adobe Flash content, a combination thereof, etc. The aforementioned examples of mobile media contents are for illustration purposes only, and may include any additional mobile media content that can be displayed on the mobile device 500.

The particular mobile media content corresponds to a particular digital signage content 270 currently displayed on the display 260 of the digital signage display unit 200.

The plurality of digital signage contents currently displayed on the display 260 of the digital signage display unit 200 may comprise at least one advertising campaign. The advertising campaign may consist of a text, still images, video images, a combination thereof, etc., displayed on the display 260. The corresponding mobile media content may consist of a video, a landing page of a website, a microsite, a game, a survey, a lead-capture form, a coupon, an application store download, a combination thereof, etc. The corresponding mobile media content may also consist of a remote-control instruction or callback to the digital signage server 100 to perform a specific action (e.g. trigger the display of a specific digital signage content on the display 260 of the digital signage display unit 200). The corresponding mobile media content generally promotes product(s) or service(s) in relation to an advertising campaign. However, the corresponding mobile media content may also be related to video on demand displayed on the display 260 of the digital signage display unit 200 (a menu displayed on the display 560 of the mobile device 500 allows to select the displayed video). The corresponding mobile media content may also be related to participative crowd applications. For instance, in a venue such as a stadium, people can vote (via a menu displayed on the display 560 of their mobile devices 500) for the next video to appear on a big screen (the display 260 of the digital signage display unit 200).

The plurality of digital signage contents may also comprise informative or entertaining contents, such as for example newsfeeds, a news report, a weather report, a short movie, a video clip, etc. The corresponding mobile media content may consists of a video, a landing page of a website, etc., providing additional information in relation to the informative or entertaining content.

The mobile media content may also consist of a mobile commerce website for purchasing products or services related to the corresponding digital signage content displayed on the display 260. This example will be detailed later in the description.

In a particular aspect, the mobile media content item for identifying a particular mobile media content comprises an identifier of the owner of the mobile media content (e.g. the name of the company producing or selling products and services related to the mobile media content, the name of the media distributing the informative or entertaining mobile media content, etc.). In general, the owner of the mobile media content is the same as the owner of the corresponding digital signage content. If this is not the case, the mobile media content item comprises an identifier of the owner of the corresponding digital signage content, optionally combined with the identifier of the owner of the mobile media content. Alternatively or complementarity, the mobile media content item identifies a particular product, service, informative or entertaining content, which is presented by the mobile media content. Additionally, the mobile media content item may comprise an indication of the type of mobile media content (e.g. an image, a video, a web page, etc.).

In another particular aspect, if the user of the mobile device 500 is located in a venue where several digital signage display units 200 are present (e.g. in a waiting room, in an airport, etc.), the mobile media content items may correspond to digital signage contents currently displayed on a plurality of digital signage display units 200 in a vicinity of the mobile device 500, for instance within communication range of the plurality of digital signage display units 200 with the mobile device 500.

The method 400 comprises the step 440 of displaying by the processing unit 510 the plurality of mobile media content items on the display 560 of the mobile device 500. For example, a menu or a selectable list comprising the plurality of mobile media content items may be displayed on the display 560, to allow a user of the mobile device 500 to choose among the plurality of displayed mobile media content items. The mobile media content items may be presented in a specific order in the menu or selectable list, the specific order having been determined by the digital signage server 100.

The method 400 comprises the step 450 of receiving by the processing unit 510 a selection of one among the plurality of mobile media content items displayed on the display 560 from a user of the mobile device 500, via the user interface 570. For example, the user selects one of the items presented in the aforementioned menu or selectable list.

The method 400 comprises the step 460 of transmitting by the processing unit 510 the selected mobile media content item to the digital signage server 100, via the communication interface 530.

The method 400 comprises the step 470 of receiving by the processing unit 510 mobile media content corresponding to the selected mobile media content item, via the communication interface 530. For instance, the digital signage server 100 performs a redirection of a web browser executed by the processing unit 510 towards a web server 600 hosting the mobile media content corresponding to the selected mobile media content item.

The method 400 comprises the step 480 of displaying the received mobile media content on the display 560 of the mobile device 500.

Reference is now made to the previously mentioned use case, where the mobile media content consists of a mobile commerce website for purchasing products or services related to the corresponding digital signage content displayed on the display 260 of the digital signal display unit 200. For example, an extract of a show is displayed on the display 260 of the digital signal display unit 200. At steps 430 and 440 of the method 400, one of the mobile media content items corresponds to a mobile ticketing website for purchasing tickets for the advertised show. At steps 450 and 460 of the method 400, the selected mobile media content item corresponds to the mobile ticketing website. At steps 470 and 480 of the method 400, the browser of the mobile device 500 is redirected to the mobile ticketing website, and the user of the mobile device 500 can purchase tickets for the advertised show. In another example, at steps 430 and 440 of the method 400, one of the mobile media content items may correspond to a website adapted for distributing mobile vouchers, coupons or loyalty cards.

In a particular aspect, the user selection at step 450 of the method 400 may be stored in a cookie stored in the memory 520 of the mobile device 500. Additionally, data (e.g. behavioral data) related to the mobile media content displayed at step 480 of the method 400 may also be collected and stored in the same or a different cookie. The content of the cookie(s) is transmitted to the digital signage server 100 with the request comprising the unique identifier at step 420 of the method 400, to provide additional information to the digital signage server 100 for performing the determination of the plurality of mobile media content items received at step 430 of the method 400.

In another particular aspect, the steps of the method 400 may be implemented by instructions of a mobile application executed by the processing unit 510 of the mobile device 500, the mobile application being downloaded from an application store (not represented in the Figures) and stored in the memory 520.

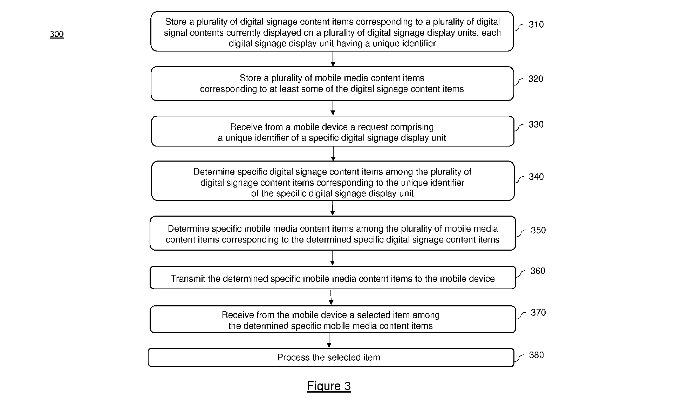

Referring now concurrently to Figures 1, 3, 4 and 5, a method 300 (represented in Figure 3) for displaying on the mobile device 500 mobile media content associated to the digital signage display unit 200 is illustrated. The method 300 is implemented by the digital signage server 100.

Furthermore, a specific computer program may have instructions for implementing the steps of the method 300. The instructions are comprised in a computer program product (e.g. the memory 120). The instructions provide for displaying mobile media content associated to the digital signage display unit 200 on the mobile device 500, when executed by the processing unit 110 of the digital signage server 100. The instructions are deliverable via an electronically-readable media, such as a storage media (e.g. USB key or CD-ROM) or via communication links (e.g. Wi-Fi network, Ethernet network, cellular network such as 3G or LTE, etc.) through the communication interface 130 of the digital signage server 100.

The method 300 comprises the step 310 of storing, in the memory 120 of the digital signage server 100, a plurality of digital signage content items. The plurality of digital signage content items correspond to a plurality of digital signal contents 270 currently displayed on a plurality of digital signage display units 200. Each digital signage display unit 200 is identified by a unique identifier.

A particular digital signage content item identifies a corresponding particular digital signal content currently displayed on a specific signage display unit 200. Thus, for each specific signage display unit 200 identified by its unique identifier, there are a plurality of digital signage content items identifying a corresponding plurality of digital signal contents displayed concurrently and / or sequentially on the specific signage display unit 200.

The digital signage content items associated to each specific digital signage display unit 200 may be determined by the processing unit 110 based on scenarios stored in the memory 120. The scenarios determine which specific digital signal contents 270 identified by corresponding digital signage content items shall be displayed on a specific digital signage display unit 200. Alternatively, the digital signage content items associated to each specific digital signage display unit 200 may be received from a configuration device (not represented in Figure 1) via the communication interface 130. In another alternative, the digital signage content items associated to each specific digital signage display unit 200 may be determined via the user interface 150 of the digital signage server 100.

The digital signage contents may be stored at the digital signage server 100 and directly streamed to the respective digital signage display units 200. Alternatively, the digital signage contents may be stored at one or several streaming servers (not represented in the Figures) under the control of the digital signage server 100 for streaming the digital signage contents to the respective digital signage display units 200. In still another alternative, the digital signage contents may be stored in advance on each digital signage display unit 200 (e.g. in the memory 220), and activated by specific triggers received from the digital signage server 100 and / or by date time conditions..As mentioned previously, at least some of the digital signage contents may consist in advertising campaigns.

The method 300 comprises the step 320 of storing, in the memory 120, a plurality of mobile media content items corresponding to at least some of the digital signage content items 270.

As mentioned previously, each particular mobile media content item identifies a corresponding particular mobile media content that can be displayed on the mobile device 500 upon selection of the particular item by a user of the mobile device 500. A particular digital signage content (identified by its particular digital signage content item) may have no corresponding mobile media content that can be displayed on the mobile device 500. Another particular digital signage content (identified by its particular digital signage content item) may have one or several corresponding mobile media content(s) that can be displayed on the mobile device 500, each of the corresponding mobile media content being identified by its respective mobile media content item.

The method 300 comprises the step 330 of receiving by the digital signage server 100 a request comprising a unique identifier of a specific digital signage display unit 200 from the mobile device 500, via the communication interface 130.

The method 300 comprises the step 340 of determining by the processing unit 110 specific digital signage content items among the plurality of digital signage content items stored in the memory 120. The determined specific digital signage content items correspond to the unique identifier of the specific digital signage display unit 200 received at step 330.

The method 300 comprises the step 350 of determining by the processing unit 110 specific mobile media content items among the plurality of mobile media content items stored in the memory 120. The determined specific mobile media content items correspond to the specific digital signage content items determined at step 340.

In a particular aspect already mentioned previously, the unique identifier may be a redirector URL and the communications between the mobile device 500 and the digital signage server 100 may be based on the HTTP protocol. A browser executed by the processing unit 510 of the mobile device 500 accesses a particular mobile subdomain with the redirector URL (e.g. m.domainname.com/45A27) corresponding to the digital signage display unit 200, via the HTTP request mentioned at step 330. Upon reception of the HTTP request by the digital signage server 100, a web server executed by the processing unit 110 of the digital signage server 100 executes a program or a script to perform the steps 340 and 350 of the method 300.

For a received unique identifier of a digital signage display unit 200, all the digital signage content items corresponding to this unique identifier are retrieved from the memory 120 at step 340. Then, all the mobile media content items corresponding to the retrieved digital signage content items are also retrieved from the memory 120 at step 350. Step 350 further comprises a determination of specific mobile media content items among the retrieved mobile media content items.

In a particular aspect, the determination of the specific mobile media content items is based on pre-defined criteria stored in the memory 120.

The pre-defined criteria may comprise, without limitations, at least one of the following. Selection of mobile media content items corresponding to the most frequently displayed digital signage contents (over a pre-determined period of time), to the most recently displayed digital signage contents (over a pre-determined period of time), to digital signage contents of advertisers benefitting of a privileged status (e.g. the advertisers paid a premium to be selected in priority), etc.

In another particular aspect, the determination of the specific mobile media content items is based on information included in the request comprising the unique identifier received at step 330. As mentioned previously, this information may have been stored in one or several cookies at the mobile device 500, and transmitted at step 420 of the method 400. This information correspond to at least one of the following: previous selections performed by a user of the mobile device 500 at step 450 of the method 400, and data related to mobile media content items previously selected by the user of the mobile device 500 (for which a corresponding mobile media content has been displayed on the mobile device 480 at step 450 of the method 400). For example, the data may comprise a time spent by a user of the mobile device 500 on the displayed mobile media content (e.g. a mobile advertising video), a category of the displayed mobile media content (e.g. travel, banking, automotive, consumer electronics, etc.), etc. The determined specific mobile media content items may correspond to the items more often selected by the user of the mobile device 500, to the mobile media contents on which the user spends most time, to the most popular categories of mobile media contents for the user, etc.

The determination of the specific mobile media content items may be based solely on the aforementioned pre-defined criteria, solely on the aforementioned information included in the request, or on a combination of both.

In still another particular aspect, the determination of the specific mobile media content items further comprises ordering the determined items. The order of the specific mobile media content items determined by the digital signage server 100 determines the order in which the specific items are displayed (e.g. in a menu or selectable list) on the mobile device 500 at step 440 of the method 400. The ordering of the specific mobile media content items may also be based solely on the aforementioned pre-defined criteria stored in the memory 120, solely on the aforementioned information included in the request comprising the unique identifier, or on a combination of both.

In yet another particular aspect already mentioned previously, it is not uncommon that, in a public venue, more than one digital signage display unit 200 are exhibited in vicinity of each other. Therefore, the determined digital signage content items may comprise items corresponding to digital signage contents displayed on a plurality of digital signage display units 200.

The method 300 comprises the step 360 of transmitting by the processing unit 110 the specific mobile media content items determined at step 350 to the mobile device 500, via the communication interface 130.

The method 300 comprises the step 370 of receiving by the digital signage server 100 a selected item from the mobile device 500, via the communication interface 130. As mentioned previously, the selected item has been selected among the specific mobile media content items transmitted at step 360, by a user of the mobile device 500 via its user interface 570.

The method 300 comprises the step 380 of processing by the processing unit 110 the selected item.

In a particular aspect, processing at step 380 the selected item comprises directing mobile media content corresponding to the selected item to the mobile device 500. For instance, the processing unit 110 transmits to the mobile device 500 a redirector URL corresponding to the address of a web server 600 hosting the mobile media content corresponding to the selected item. Upon reception of the redirector URL, a web browser executed by the processing unit 510 of the mobile device 500 accesses the web server 600 to download (or stream) the hosted mobile media content. Alternatively, the processing unit 110 transmits to the mobile device 500 mobile media content that is directly hosted at the digital signage server 100 (e.g. in its memory 120). As mentioned previously, the transmitted mobile media content may comprise at least one of the following: an image, a text, a video, a web page, a Javascript, a Cascading Style Sheet (CSS) content, an iframe content, an Adobe Flash content, etc.

In another particular aspect, processing at step 380 the selected item comprises generating statistics related to the selected items received at step 370, and memorizing the statistics in the memory 120. For instance, the statistics may include the determined specific mobile media content items transmitted to the mobile device 500 (e.g. displayed in a menu on the display 560 of the mobile device 500) and the selected item received from the mobile device 500 (e.g. selected from the menu displayed on the display 560 of the mobile device 500). The determined specific mobile media content items correspond to an impression and may have a lower ponderation, while the selected item corresponds to an interaction and may have a higher ponderation.

In an alternative embodiment, an advertising panel may be used in place of the digital signal display unit 200. The advertising panel is used for displaying a single or a plurality of advertisements in the form of poster(s) affixed to the advertising panel. A poster generally comprises a combination of text and image(s) illustrating at least one advertising campaign. The advertising panel has a unique identifier, which can be transmitted to the mobile device 500 via one of the following means: a QR code (a camera of the mobile device 500 reads the QR code (comprising the unique identifier) on the advertising panel), a Near Field Communication (NFC) tag (an NFC reader of the mobile device 500 reads an NFC tag (comprising the unique identifier) affixed to the advertising panel), etc.

Although the present disclosure has been described hereinabove by way of non-restrictive, illustrative embodiments thereof, these embodiments may be modified at will within the scope of the appended claims without departing from the spirit and nature of the present disclosure.

## Claims

1. A method for displaying mobile media content associated to a digital signage display unit on a mobile device, comprising:
receiving at the mobile device a unique identifier of the digital signage display unit;
transmitting a request comprising the unique identifier to a digital signage server;
receiving a plurality of mobile media content items from the digital signage server, the plurality of mobile media content items corresponding to at least some of a plurality of digital signage contents currently displayed on the digital signage display unit;
displaying the plurality of mobile media content items on a display of the mobile device;
receiving a selection of one among the plurality of mobile media content items from a user of the mobile device;
transmitting the selected mobile media content item to the digital signage server;
receiving mobile media content corresponding to the selected mobile media content item; and
displaying the received mobile media content on the display.

2. The method of claim 1, wherein
- the unique identifier is a redirector Uniform Resource Locator (URL); and/or
- the request comprising the redirector URL is one of the following: an Hypertext Transfer Protocol (HTTP) request or an Hypertext Transfer Protocol Secure (HTTPS) request; an/or
- the unique identifier is transmitted by the digital signage display unit to the mobile device via one of the following: a Quick Response (QR) code, a Near Field Communication (NFC) tag, a Bluetooth or Bluetooth Low Energy (BLE) call to action, and a Short Message Service (SMS) message; and/or
- the mobile media content comprises at least one of the following: an image, a text, a video, a web page, a Javascript, a Cascading Style Sheet (CSS) content, an iframe content, and an Adobe Flash content.

3. The method of claim 1, wherein the plurality of digital signage contents comprises at least one advertising campaign.

4. The method of claim 1, wherein the plurality of mobile media content items further comprises items corresponding to at least some of a plurality of digital signage contents currently displayed on at least one other digital signage display unit.

5. The method of claim 1, wherein the user selection is stored in a cookie at the mobile device, and a content of the cookie is transmitted to the digital signage server with the request comprising the unique identifier.

6. The method of any one of claims 1 to 5, wherein data related to the displayed mobile media content are further collected and stored in the cookie, and the content of the cookie is transmitted to the digital signage server with the request comprising the unique identifier.

7. A computer program product comprising instructions deliverable via an electronically-readable media, such as storage media and communication links, which when executed by a processing unit of a mobile device provide for displaying mobile media content associated to a digital signage display unit on the mobile device by:
receiving at the mobile device a unique identifier of the digital signage display unit;
transmitting a request comprising the unique identifier to a digital signage server;
receiving a plurality of mobile media content items from the digital signage server, the plurality of mobile media content items corresponding to at least some of a plurality of digital signage contents currently displayed on the digital signage display unit;
displaying the plurality of mobile media content items on a display of the mobile device;
receiving a selection of one among the plurality of mobile media content items from a user of the mobile device;
transmitting the selected mobile media content item to the digital signage server;
receiving mobile media content corresponding to the selected mobile media content item; and
displaying the received mobile media content on the display;

8. A digital signage server, comprising:
memory for:
storing a plurality of digital signage content items corresponding to a plurality of digital signal contents currently displayed on a plurality of digital signage display units, each digital signage display unit having a unique identifier;
storing a plurality of mobile media content items corresponding to at least some of the digital signage content items;
a communication interface for:
receiving from a mobile device a request comprising a unique identifier of a specific digital signage display unit;
a processing unit for:
determining specific digital signage content items among the plurality of digital signage content items corresponding to the unique identifier of the specific digital signage display unit;
determining specific mobile media content items among the plurality of mobile media content items corresponding to the determined specific digital signage content items;
transmitting the determined specific mobile media content items to the mobile device via the communication interface;
processing a selected item among the determined specific mobile media content items, the selected item being received from the mobile device via the communication interface.

9. The system of claim 8, wherein the plurality of digital signage contents comprises at least one advertising campaign.

10. The system of claim 8, wherein the determined digital signage content items further comprise items corresponding to at least one other digital signage display unit.

11. The system of claim 8, wherein the determination of the specific mobile media content items is based on one of the following: pre-defined criteria stored in the memory, and information included in the request comprising the unique identifier.

12. The system of claim 11, wherein the information comprises at least one of the following: previous selections performed by a user of the mobile device, and data related to mobile media content items previously selected by the user of the mobile device.

13. The system of claim 8, wherein the determination of the specific mobile media content items further comprises ordering the items based on at least one of the following: pre-defined criteria stored in the memory, and information included in the request comprising the unique identifier.

14. The system of claim 8, wherein processing the selected item comprises directing mobile media content corresponding to the selected item to the mobile device.

15. The system of any one of claims 8 to 14, wherein
- the unique identifier is a redirector URL; and/or
- the request comprising the redirector URL is one of the following:
an HTTP request or an HTTPS request; an/or
- the mobile media content comprises at least one of the following:
an image, a text, a video, a web page, a Javascript, a Cascading Style Sheet (CSS) content, an iframe content, and an Adobe Flash content.
